# EUROPEAN PATENT APPLICATION

(11) **EP 2 782 350 A1**
(43) Date of publication of application: **24.09.2014**
(21) Application number: 13159952.4
(22) Date of filing: 19.03.2013
(51) Int. Cl.: H04N 21/418, H04N 21/434, H04N 21/443, H04N 21/45, H04N 21/462, H04N 21/472

(54) **Device and method for starting an application**

(71) Applicant: TP Vision Holding B.V., 1097 JB Amsterdam (NL)
(72) Inventor: Mevissen, Perry, 1097 JB Amsterdam (NL); Brondijk, Robert, 1097 JB Amsterdam (NL); Kamperman, Frank, 1097 JB Amsterdam (NL); Muijen, Maarten, 1097 JB Amsterdam (NL); Vrielink, Koen, 1097 JB Amsterdam (NL)
(74) Representative: Busch, Patrick

(57) **Abstract**

The invention provides a receiver (10) for receiving a digital broadcasting signal, such as a Digital Video Broadcasting, DVB, signal, the receiver comprising a processing unit (12) configured for
- obtaining a plurality of application description items (23, 24, 25), each of the at least one application description items corresponding to an application and including a reference to a source of executable code of the application, the plurality of application description items forming an application list;
- selecting an application from the application list based on pre-stored application preferences or on a selection made by a user via a User Interface, UI;
- executing the selected application, by obtaining and executing the corresponding executable code.

## Description

### Field of the invention

The invention relates to a receiver and a method for starting an application in a receiver receiving a digital broadcasting signal. The invention further relates to a transmitter and method for transmitting a digital broadcasting signal.

### Background of the invention

With modern digital broadcasting standards, such as the various Digital Video Broadcasting (DVB) standards, it is possible to not only transmit broadcast programs, but also to include further applications and services.

ETSI TS 102 809 "Digital Video Broadcasting Signalling and carriage of interactive applications and services in Hybrid broadcast/broadband environments" discloses application information signalling in DVB systems. Using application signalling, a wide range of application models can be enabled. For example, an application may be bound to a broadcast service and started automatically when that service is selected. Applications can also be bound to a more than one broadcast service or to just a part of a single broadcast service.

Applications may in principle use any type of executable code. However, to ensure compatibility across a wide range of devices, standardisation of application code is important. Currently, applications often use the Hybrid Broadcast Broadband TV (HbbTV) standard, which is described in European Telecommunications Standards Institute (ETSI) TS 102 796.

The main information source for application signalling is the Application Information Table (AIT). The AIT contains descriptions to one or more applications. In general, the broadcaster determines the contents of the AIT.

CI (Common Interface) and CI-Plus (Common Interface plus) are content control systems which are currently in use for satellite signal, and cable television program reception, in particular in the Digital Video Broadcasting DVB-S, DVB-T, and DVB-H standards. The CI or CI-Plus system comprises a Conditional Access Module (CAM or CICAM) which, when inserted into the corresponding Common Interface slot of a compatible TV set (typically called the CI host), allows a user to subscribe and watch a pay TV service from a pay TV service operator, without requiring an additional set-top-box. The CICAM has a slot for inserting a smartcard that is issued by the service operator. The smart card, inserted into the CI-Plus-CAM controls the decrypting of those TV programs to which the user is allowed access.

The main difference between CI and CI-Plus is that in CI-Plus, a trusted channel is formed between the CICAM and television receiver, so that the decrypted content can be re-encrypted, using a key that is known at both ends of the trusted channel, before it is sent back from the CICAM to the receiver. That makes it harder for third parties to "steal" the CAM-decrypted content by sampling the out-going signal from the CAM.

The CICAM system allows broadcast programs, in particular as DVB .programs, to be transmitted in CA (Conditional Access) encrypted form which can only be decrypted by a valid CICAM. This helps ensure that the received signal cannot be easily copied and redistributed via another network, e.g. the internet.

The network operator generally controls (and supplies) the CICAM and controls the CA encryption. The CICAM may also contain applications that can be executed on a processing unit of the CI host.

There are thus at least two types of applications that may be executed on a digital receiver. The applications signalled via the AIT, typically controlled by the broadcaster, and the applications stored on the CICAM, typically controlled by the CICAM itself, as programmed by operator.

Both types of applications can conflict with each other - for example, both may attempt to deliver the same or similar (even competing) functionality at the same time or for the same program. Within AIT signalled applications, multiple applications having similar functionality may be signalled. The CICAM may also have multiple applications, for example for different hardware/software versions of the receiver.

As a result, there is a need for a better handling of the various applications available in modern digital receivers.

### Summary of the invention

The invention provides a receiver for receiving a digital broadcasting signal, such as a Digital Video Broadcasting, DVB, signal, the receiver comprising:
- a receiving unit for receiving the digital broadcasting signal;
- an interface unit (for example a Common Interface, CI, module) for connecting with a Conditional Access Module (CAM, for example a Common Interface CAM, CICAM);
- a processing unit configured for
- obtaining application information signalling (for example, an application information table, AIT) from the digital broadcasting signal;
- obtaining from the application information signalling at least one application description item, each of the at least one application description item corresponding to an application and including a reference to a source of executable code of the application;
   **characterized in that** the processing unit is further configured to
- obtain executable code for an application from a CAM (that is, if one is connected to the interface unit) via the interface unit if the reference to a source of executable code corresponds to a predetermined format.

The application information signalling / AIT can thus not only signal applications in object carousel (dvb:// prefix) or on a network (http:// prefix), but also applications stored on a CICAM. This advantageously allows a central piece of information (the AIT) to refer to all applications, instead of having an AIT for broadcaster-controlled applications and a CICAM or receiver-hosted system for the operator-controlled applications.

In an embodiment according the invention, the reference to a source of executable code is a URL with a predetermined prefix, such as "cam://". Using a predetermined prefix, for example "cam://", advantageously distinguishes (CI)CAM URLs from other URLs.

In an embodiment according the invention, the processing unit is further configured to form an application list from all obtained application description items.

In an embodiment according the invention, the processing unit is configured to search the CAM for stored applications and to add found applications to the list. In an embodiment according the invention, the processing unit is configured to monitor the application information signalling for applications offered on the current channel and to add found applications to the list. In an embodiment according the invention, the processing unit is configured to search an object carousel of the digital broadcasting signal for stored applications and to add found applications to the list.

An application list of available applications may thus be formed. This list can be used as input for a launcher application that allows a user to select an application for execution. The list may be filtered, either by the launcher application or by another process, before the list is provided to the user. The filtering may comprise removing applications that are unsupported, obsolete (i.e. a newer version is available), have a low priority, or which are for other reasons not desirable to be presented to the user. An advantage of filtering is that the number of choices for the user is reduced, making the choice easier. That way, an advantageous balance may be struck between the user having no choice (as in prior art systems) and having too much options (i.e. including applications which cannot be run, or which are obsolete).

In an embodiment according the invention, the processing unit is configured to remove an item from the application list if the application corresponding to the item is not supported by the receiver. The term "not supported" can mean that the hardware or software platform of the receiver does not have the required functionality for the application. It may also mean that the hardware or software platform is not licensed to execute the application.

In an embodiment according the invention, the application description item includes priority information, and the processing unit is configured to remove an item from the application list if the priority is lower than the priority of another application description item for the same application.

In an embodiment according the invention, the processing unit is configured to present the application list to the user for selection of an application by the user.

The invention further provides a method for receiving a digital broadcasting signal, such as a DVB signal, in a receiver comprising an interface unit (for example a CI unit) for connecting to a CAM (for example a CICAM), the method comprising:
- receiving information included in the digital broadcasting signal relating to an interactive application;
- obtaining application information signalling (for example, an application information table, AIT) from the digital broadcasting signal;
- obtaining from the application information signalling at least one application description item, each of the at least one application description item corresponding to an application and including a reference to a source of executable code of the application;
   characterized by
- obtaining executable code for an application from a CAM (if one is connected) via the interface unit if the reference to a source of executable code corresponds to a predetermined format.

The method may be combined with any of the features described above in reference to the receiver above.

According to a second aspect, the invention provides a receiver for receiving a digital broadcasting signal, such as a Digital Video Broadcasting, DVB, signal, the receiver comprising a processing unit configured for
- obtaining a plurality of application description items, each of the at least one application description items corresponding to an application and including a reference to a source of executable code of the application, the plurality of application description items forming an application list;
- selecting an application from the application list based on pre-stored application preferences or on a selection made by a user via a User Interface, UI;
- executing the selected application, by obtaining and executing the corresponding executable code.

An application list may be compiled based on the application information that is obtained. The application list can simply be the ensemble of obtained application description items. It may also be a compilation of parts (e.g. an application name and a URL for obtaining an executable code) of the plurality of description items. It is not necessary that all of the plurality of description items have the same format. For example, application description items obtained from a DVB AIT may have a different format than application description items obtained by searching a CICAM. What is required is that an application description item identifies an application and provides at least a pointer for obtaining an executable form of the application.

The receiver may, advantageously, provide the user with a UI for making a choice of application when there is more than one application available. Alternatively, if pre-stored settings are available, the receiver may automatically select an application. For example, the user can have previously indicated that applications provided by a Conditional Access Module are preferred over applications included in an object carousel. The user can thus advantageously override an automatic selection made by for example an AIT priority setting. The functionality for obtaining a plurality of application description items, with our without user interface, can for example be a local application (i.e. supplied by the manufacturer of the receiver) or it can for example be provided by the operator.

The application list may be filtered before a selection is made. For example, the application list may be filtered to contain only applications of a certain type or class (for example video on demand applications).

In an embodiment according the invention, the processing unit is configured for providing a User Interface, UI, for selecting the selected application, said UI displaying a representation of the application list. In an embodiment according the invention, the processing unit is configured for selecting a selected application based on pre-stored application preferences including a preference for an application source or an application version.

In an embodiment according the invention, the processing unit is configured to, as part of obtaining a plurality of application description items, search a connected Conditional Access Module, CAM, for stored applications and to add found applications to the application list.

In an embodiment according the invention, the processing unit is configured to, as part of obtaining a plurality of application description items, monitor application information signalling in the digital broadcasting signal for applications offered on the current channel and to add found applications to the application list.

In an embodiment according the invention, the processing unit is configured to, as part of obtaining a plurality of application description items, search an object carousel of the digital broadcasting signal for applications and to add found applications to the application list.

In an embodiment according the invention, the processing unit is configured to remove an item from the application list if the application corresponding to the item is not supported by the receiver. This is also a form of filtering the application list. In an embodiment according the invention, the application description item includes priority information, and the processing unit is configured to remove an item from the application list if the priority is lower than the priority of another application description item for the same application.

In an embodiment according the invention, the functionality of obtaining a plurality of application description items is provided by an application provided by the receiver. The manufacturer of the receiver may thus provide the functionality, independent of choices made by the operator.

In an embodiment according the invention, the functionality of obtaining a plurality of application description items is provided by an application signaled in the application information signalling. In this case, the broadcaster may be provider of the functionality. It is also possible that the application signalling is added by an intermediary, for example the operator.

In an embodiment according the invention, the functionality of obtaining a plurality of application description items is provided by an application provided in a Conditional Access Module, CAM, connected to the receiver. The operator is typically the provider of CAM applications.

In an embodiment according the invention, the processing unit is configured for obtaining executable code for an application from a connected CAM if a reference to a source of executable code in one of the application description items from the application information signalling corresponds to a predetermined format.

The invention further provides a method for starting an application in a receiver for a digital broadcasting signal, such as a Digital Video Broadcasting, DVB, signal, the method comprising:
- obtaining, by the receiver, a plurality of application description items, each of the at least one application description items corresponding to an application and including a reference to a source of executable code of the application, the plurality of application description items forming an application list;
- executing a selected application from the application list, by obtaining and executing the corresponding executable code.

The method may be combined with any of the features of the receiver as described above.

The invention further provides a receiver and a system of a receiver and a CAM configured to implement a method as described above.

The invention further provides a CAM storing an executable file for an application, an icon file corresponding to the application, and an application description file corresponding to the application. The application may be advantageously found by the host of the interface for the CAM, which host can then make a description item based on the application description file, so that the found application can be added to a collection of available applications.

The invention further provides a method for modifying a digital broadcasting signal, including signalling for a default application, by inserting a launcher application description item. The launcher application will be run instead of the default application. The launcher application will allow a user to choose between the default application and a further application. The further application could be included on a CAM of the receiver where the launcher application is run.

It will be clear to a skilled person that the digital broadcast signal can be transmitted in a number of ways, for example in the manner known from terrestrial, satellite, and cable broadcasting standards. It can be transmitted over managed IP networks.

### Brief description of the Figures

On the attached drawing sheets,
- figure 1 schematically shows a system of a digital TV receiver and a CICAM according to an embodiment of the invention;
- figure 2 schematically shows an Application Information Table according to an embodiment of the invention;
- figure 3 schematically shows a DVB distribution system according to an embodiment of the invention;
- figure 4 schematically shows a flow diagram for selecting an application according to an embodiment of the invention;
- figure 5 schematically shows a launcher application according to an embodiment of the invention;
- figures 6 and 7 schematically show flow diagrams for filtering an application list according to an embodiment of the invention;
- figure 8 schematically shows a launcher application according to an embodiment of the invention;
- figure 9 schematically shows a CICAM file system according to an embodiment of the invention; and
- figure 10 schematically shows a chain of digital broadcasting signal distribution according to an embodiment of the invention.

### Detailed description

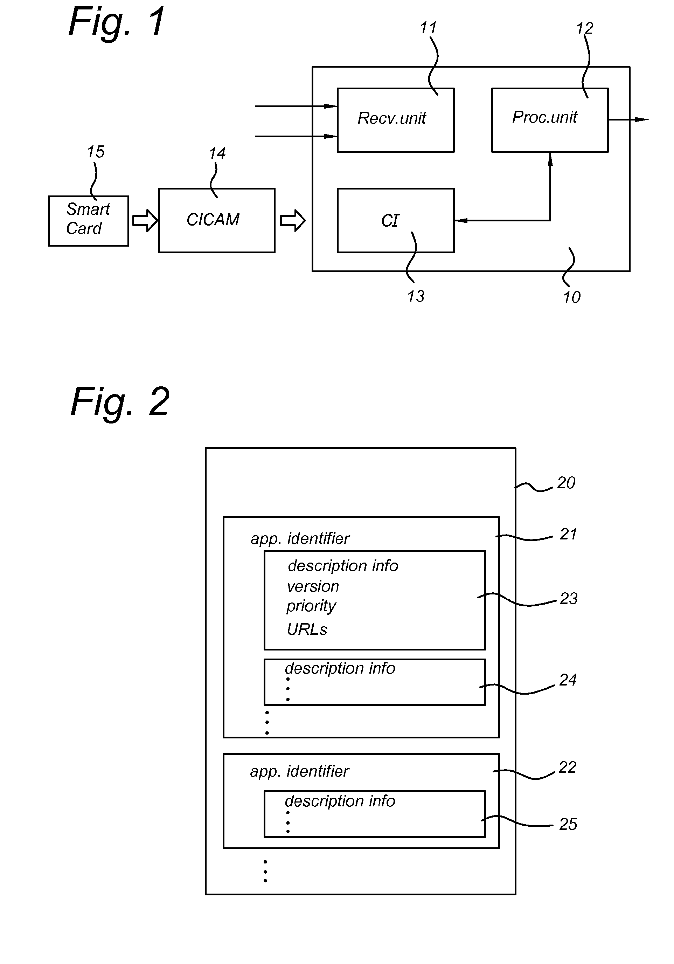

Figure 1 schematically shows a system of a digital TV receiver 10 and a CI CAM (hereafter CICAM) 14 with smart card 15. The receiver 10 comprises a receiving unit 11, a processing unit 12, and a Common Interface (CI) unit 13.

Generally, the receiver 10 is a consumer electronics device that is used to receive and navigate the broadcast digital media. The receiving unit 11 can receive broadcasting signals from a broadcasting network (e.g. cable, satellite, terrestrial, etc). It may also have an internet connection for exchanging data with servers on the internet. The processing unit 12 typically comprises a programmable processor which can communicate with the receiving unit 11 and CI unit 13. The usual prerequisites for the reception of digital TV, namely tuning, demodulating, demultiplexing, and decoding are performed by the assembly of receiving unit 11 and processing unit 12. For free-to-air material this is all that is required to receive and decode digital content. If the received content is protected by a CA system, then a CICAM 14 is required.

The CI unit 13 includes one or more slots which accept CICAMs 14. DVB CICAMs that comply with the CI standard EN 50221 have no Content Control system to protect the descrambled content. In CI systems, content where the CA system protection has been removed is passed to the host unprotected. Hosts compliant with the CI-Plus standard have a Content Control decryption module. The CI-Plus host interoperates with the CICAM to provide a secure content control system to protect high value content which has been CA decrypted.

The CICAM 14 contains the consumer end of the CA system. It comprises a CA decryption module for decrypting secure content, a CA key calculation module for calculating keys based in part on data from a smart card, and a smart card interface for receiving the smart card 15.

CI-Plus CAMS (hereafter also denoted as CICAM) also include Content Control (CC) modules for re-encrypting the CA decrypted signal. The Content Control encryption module re-encrypts the content using a key that has been agreed on a shared secure channel between the CICAM and the host. The CC system crypto tools module facilitates in generating keys and setting up a secure channel with the host. The CC system crypto tools module also contains cryptographic tools and features which enable it to authenticate the trustworthiness of the host the CICAM has been inserted into.

Some CI / CI-Plus standards (e.g. CI-Plus 1.4 and later) feature a file system for storing digital data, which file system can be mounted by the host in which the CICAM 14 is inserted.

Figure 2 schematically shows an Application Information Table (AIT) 20 as used in the DVB standard. The AIT is typically provided by the broadcaster, and included in the DVB signal received by the receiving unit 11. The general format of the DVB AIT is specified in ETSI TS 102 809.

The AIT 20 includes an application type, which is a 15 bit code representing a type of application according to a table maintained by ETSI. For each application type, one or more application entries 21, 22 are referenced. Each application entry 21, 22 is characterized by an application identifier. In DVB, an application identifier is a 48 bit number, with 32 bits representing an originating organisation ID and 16 bits representing an application ID. Each application entry 21, 22 has one or more description entries 23, 24, 25. In the example of figure 2, application entry 21 has two description entries 23, 24 and application entry 22 has one description entry 25. Each description entry 23, 24, 25 includes version information, a priority value, and information on the source of the application. According to the present DVB standard, an application may be obtained from the "object carousel" (a repeated signal as part of the DVB signal) or via a HTTP connection (e.g. from the internet). Similar to the notation "http://" as prefix for a resource reachable via HTTP, an object carousel application is sometimes indicated with the "dvb://" prefix.

Table 1 shows a part of an AIT according to ETSI TS 102 809. The AIT is in fact composed of an arbitrary number of AIT sections according to table 1. The section of table 1 refers to one application type (application_type). It can refer to a number N of applications, each having its own application_identifier and referring to another number N of application descriptors.

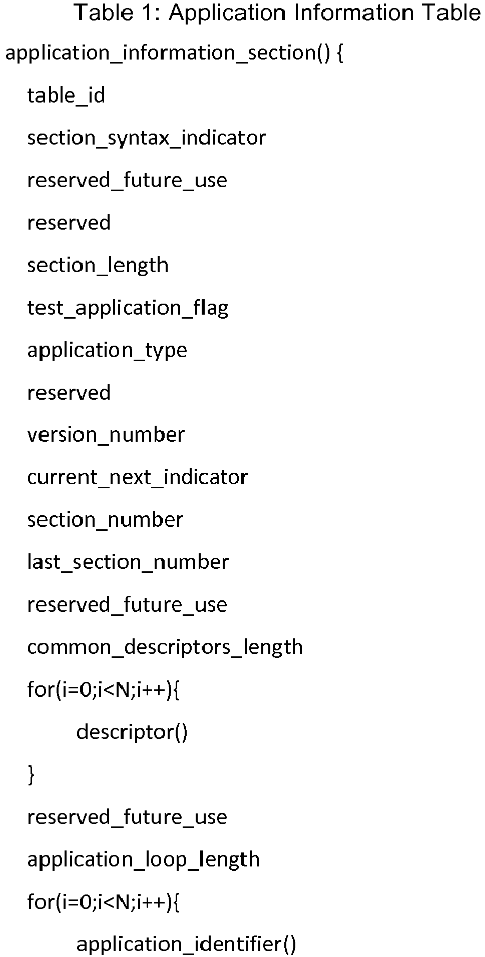

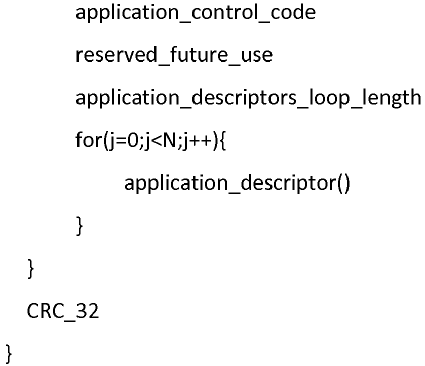

The application descriptor schema is shown in table 2. Each descriptor includes versioning information and a priority value. Up to N transport protocol labels can be specified.

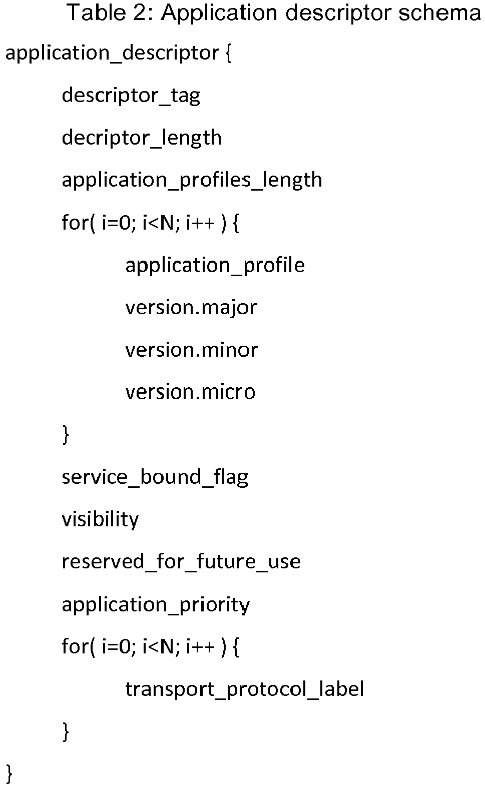

The schema for the transport protocol label includes a value for the protocol_id (the present standard allows Object Carousel and HTTP) and a selector_byte which includes the URL (e.g. dvb://1.2.3.b4/main/index.foo or http://www.example.com/apps/main/index.foo).

In general, the AIT 20 can be said to comprise one or more application description items 23, 24, 25, wherein each application description item comprises information about where executable code of the application may be found. The description item can also provide information relating to priority, versioning, hardware/software requirements, type of application, description of the application, where an icon can be found, etc. It is not required that the description item, as a data container, includes the information. It may also inherit information relating to the application from its parent container. For example, in the case of DVB AITs, the "application_identifier" and "application_control_code" is included in the second loop of table 1, which is the parent of the descriptor of table 2. For the purposes of this application, the application_identifier is considered to be comprised (via inheritance) in the application descriptor.

According to an embodiment of the present invention, the AIT supports a further source for applications, namely the CICAM. This may be achieved in various ways. A further protocol_id may be reserved for an address in a CAM file system. Alternatively or additionally, the URL (e.g. as determined via the selector_byte) could use a "cam://" prefix, so that for example the full URL reads "cam://apps/main/index.foo". The processing unit 12 of the receiver 10, having interpreted an AIT according the invention, will then attempt to retrieve the application "index.foo" from the directory "apps/main/" of the CAM file system, via the CI unit 13.

While the DVB system and its application signalling features using an AIT have been used to illustrate aspects of the invention, a general principle of the invention is to use application signalling in the broadcasting signal to indicate that an application included in a Conditional Access Module should be executed. This advantageously allows two (or three, including HTTP) sources of applications to be integrated in a single signalling application. This has not been done before, partly because broadcasters typically supply the AIT and operators typically supply the CICAM.

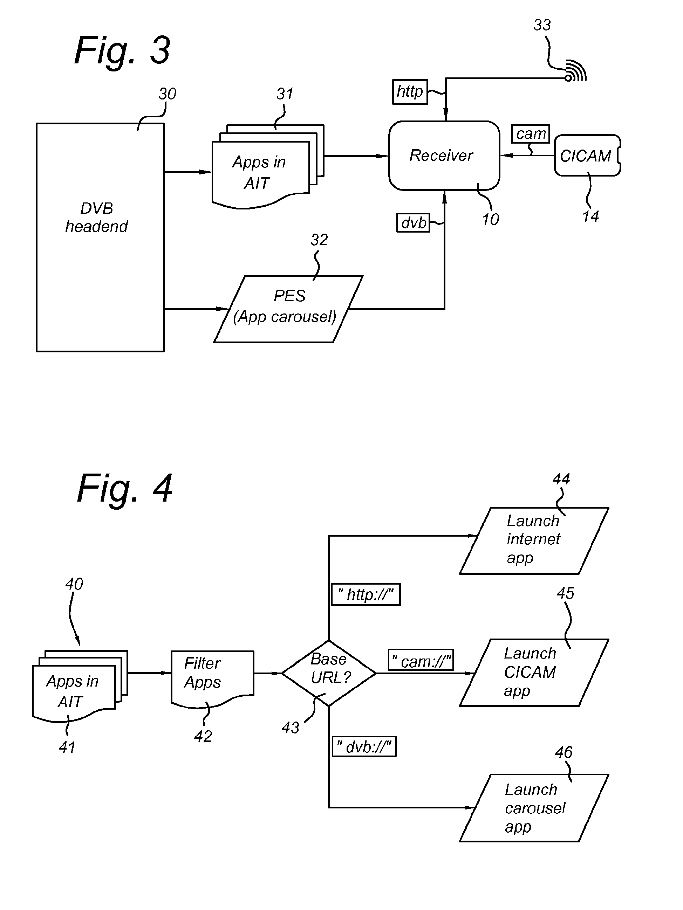

Figure 3 schematically shows a DVB distribution system according to an embodiment of the invention..The DVB headend 30 supplies a DVB signal including AIT 31 and applications in the object carousel 32 to a receiver 10. The receiver also has an (internet) connection for receiving applications via the HTTP protocol from network 33. As before, the receiver 10 has a CI unit 13 which can receive a CICAM 14. Applications from the object carousel are indicated with the URL prefix "dvb://" while applications from the CICAM are indicated with "cam://".

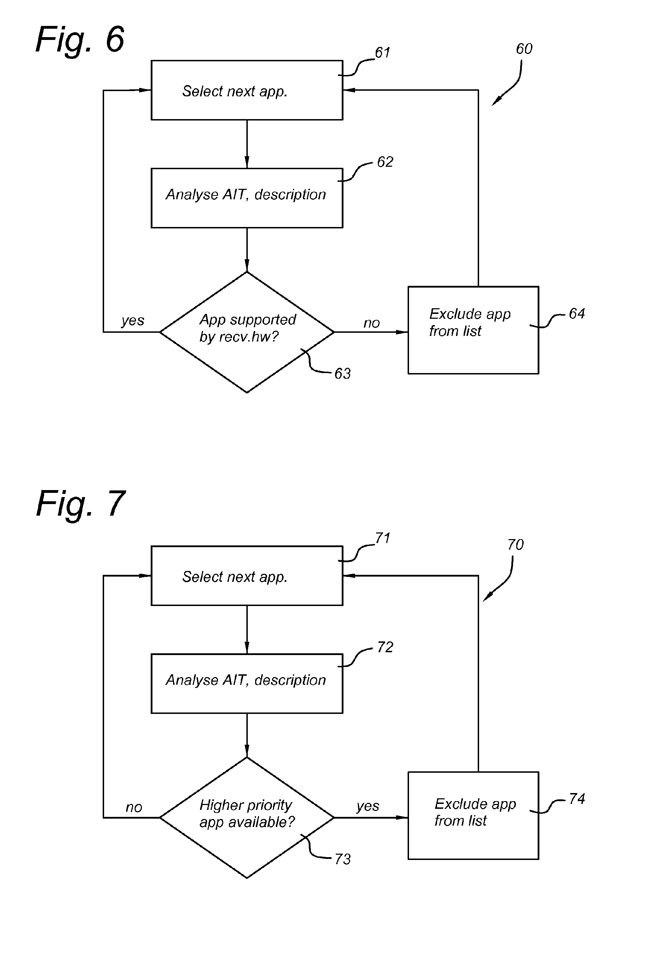

Figure 4 schematically shows a flow diagram for selecting an application. As input the list of applications listed in the AIT is obtained in step 41. In step 42, a number of applications are filtered out, such as applications that are not supported on the present hardware/software platform of the receiver 10 (for more details see figure 6). Where multiple applications for the same functionality are provided, all similar applications except the application with the highest priority may be removed from the list (for more details see figure 7). A final filtering step may be the selection of a single application from the application list by a user.

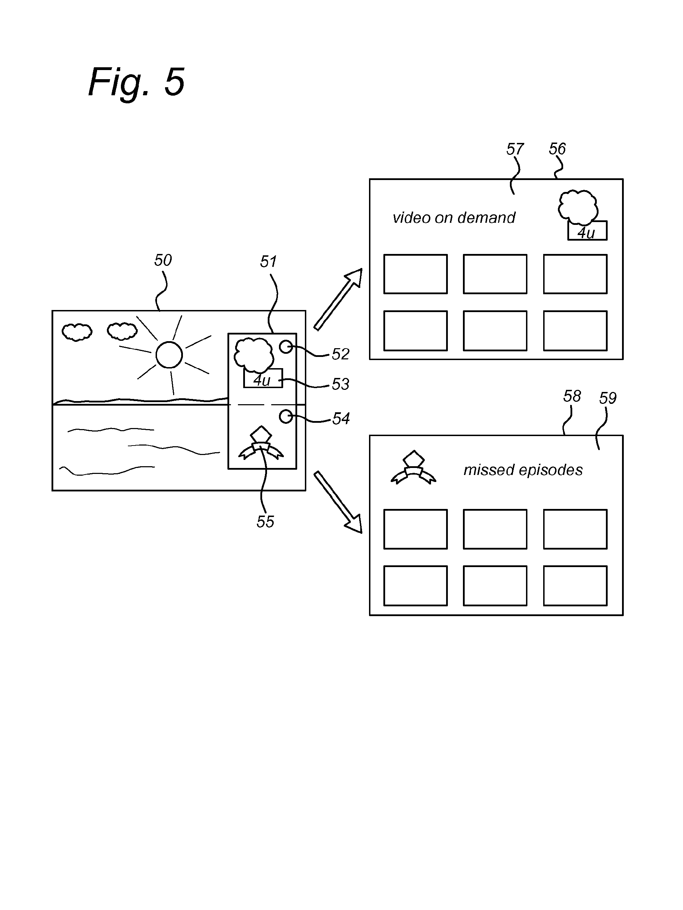

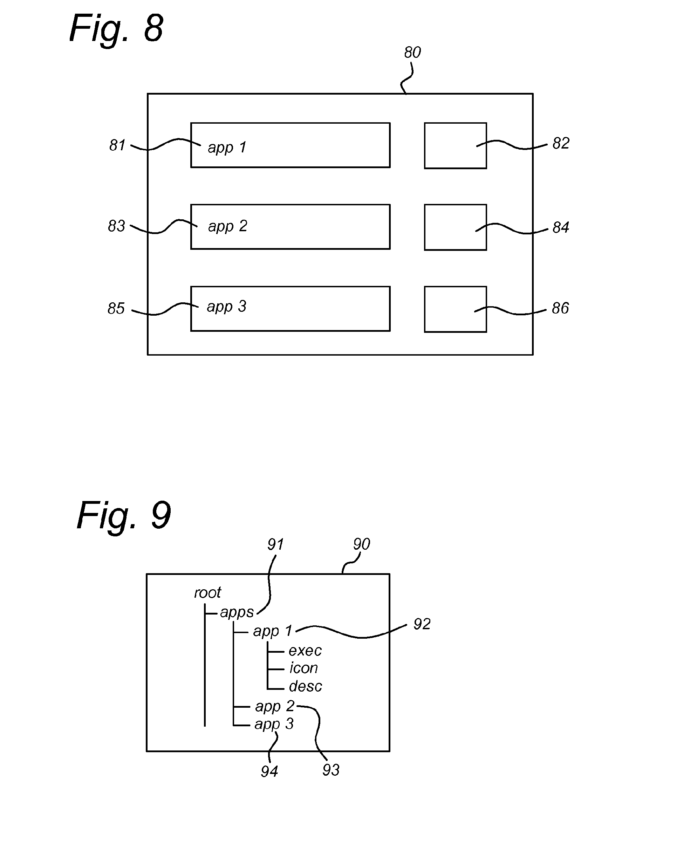

In the following, it is assumed that only a single application remains after filtering the list. In reference to figures 5 and 8 alternative schemes for dealing with multiple applications will be discussed.

In step 43, the prefix of the URL of the remaining application is considered. If the prefix is "http://", the application will be retrieved from a TCP/IP network in step 44. If the prefix is "cam://", the application will be retrieved from the CICAM file system via CI unit 13. If the prefix is "dvb://", the application is to be found in the object carousel.

Figure 5 schematically shows a launcher application 51 for starting one or more applications. In the present example, two applications having similar functionality are available (for example, these two applications remain after the filtering step 42). The first application is a video on demand (VoD) application 56 provided by the operator and stored in the CICAM, and the second is a catch-up application 58 for viewing missed episodes provided by the broadcaster. The launcher application 51 shows an overlay window overlaying regular broadcasting 50, the overlay window comprising the logo's 53 and 55 for respectively the first and second application, as well as differently coloured dots 52 (red) and 54 (green) for indicating which button to press on the remote control to start the application. If the users presses the red button on the remote control, VoD application 56 showing User Interface (UI) 57 will be launched. If the user presses the green button, catch-up application 58 showing UI 59 will be launched.

There are various ways in which the launcher application 51 itself may be launched.

A first option is to also include the launcher application 51 in the application signalling. The launcher application should then have a higher priority (application_priority) than the other applications 56, 58 that may be launched by the launcher 51. The goal is to suppress automatic execution of the other applications. This can also be achieved by setting the control code (application_control_code) in the application (descriptor) entry of the AIT to "PRESENT", which indicates that the application may be run but should not be auto-started. The broadcaster can add the launcher application 51 and at the same time configure the AIT for applications 56 and 58, which are to be launched by launcher 51, correctly to prevent auto-starting of applications 56 and 58. Alternatively, a transmitter of the signal (e.g. the operator) could add the launcher application 51 and modify the AIT entries for applications 56 and 58.

A second option for launching the launcher application is by adding the launcher functionality to the user interface of the receiver 10. For example, the processing unit 10 may be configured to detect that multiple applications for a similar functionality are available. The processing unit 10 then launches its built-in launcher application 51 configured to allow a user to select one of the similar applications.

A third option would be to provide a launcher application on the CICAM, which is then configured to be launched after initialization and to stay active while the receiver is turned on. The active launcher application will then detect a situation in which multiple similar applications are provided and launch a User Interface to allow a user to choose one. This is similar to option two, except that the functionality of option two is not built-in in the receiver but rather provided via the CICAM. This would allow the operator, rather than the receiver manufacturer, to provide the launcher functionality.

In combination with all three options, but in particular in combination with option 2, the launcher application or the general receiver User Interface, may contain software instructions for scanning the CICAM for applications, to add to the list presented to the user via the launcher application.

Referring again to the filtering step 42 in figure 4, figures 6 and 7 schematically show flow diagrams 60, 70 for filtering an application list. In step 61 a next application description entry is selected. The entry is analysed in step 62. If, in step 63, it is determined that the application is not supported by the hardware or software of the receiver 10, or if the application_type in the corresponding AIT section is not supported, the entry is removed from the list in step 64. Control returns to step 61 until all entries have been analyzed.

Steps 71 and 72 of flow 70 in figure 7 are similar to the steps 61 and 62 in figure 6. In step 73 it is checked if an application with a higher priority is available. If so, the present application is removed from the list in step 74.

Flows 60 and 70 may be used in series, first removing unsupported applications using flow 60, then, from the list of supported applications, removing all applications that do not have the highest priority for each kind of application. A further filtering step (not shown) may be to select applications of a certain type (e.g. VoD or catch-up applications).

Figure 8 schematically shows a launcher application User Interface. It lists all applications that remain after filtering. The UI comprises a text element 81, 83, 85 containing a representative text for each of the three listed applications respectively and a logo 82, 84, 86 for each of the applications. The logo of an application can be included in the object carousel, made available via a network, or can be included in the CAM file system.

The launcher application in any of the embodiments according the invention does not necessarily provide the user with a choice. It may also make an automatic choice (and thereby forego displaying a User Interface 51, 80) for example based on pre-stored user or operator preference settings. The launcher application may provide a separate User Interface so that the user may enter his preferences. The user could for example indicate, using the UI, that CAM applications are preferred over carousel or HTTP applications.

Figure 9 schematically shows a CICAM file system 90. The file system 90 has an "apps" directory 91, in which an "app1" directory 92 is included. The app1 directory contains a file with executable code, an icon file, and an application description text file. The apps directory further comprises an "app2" 93 and "app3" 94 directory for two further applications respectively. Including the icon and description text in the CICAM makes it unnecessary to include the icon and text for CAM applications in e.g. the object carousel or an internet server.

In an embodiment, the receiver can use the operator profile resource of the CICAM to scan for applications. This is supported in CI-Plus version 1.4 and later.

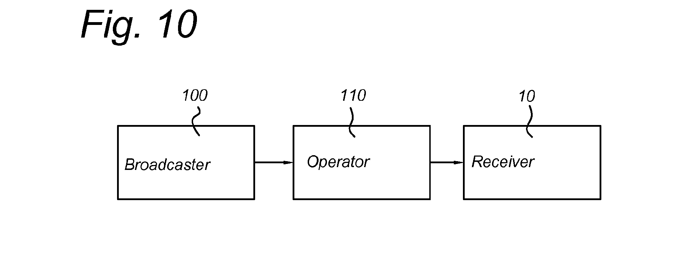

Figure 10 schematically shows a chain of digital broadcasting signal distribution. Aspects of the invention may be advantageously used as will now be explained. The broadcaster 100 provides a digital broadcasting signal, such as a DVB signal, with a certain default AIT. For a given service, it may signal an application, such as a catch-up application 56, that may be run when the service is selected. The operator 110 receives the signal from the broadcaster and redistributes it to receivers 10 that subscribe to the operator's service. The receivers 100may have a CI 13 and an operator-supplied CICAM 14 and smart card 15.

The operator 110 may monitor the AIT in the signal it receives and note the signalling of the catch-up application. In the present example, we assume that the CICAM by the operator provides a similar application (for example Video on Demand application 58). The operator can then do a number of things according to further aspects of the invention.

He may insert a description item referring to the CICAM application in the AIT, so that this application is signalled as well. The AIT description may then refers to a "cam://" URL so that the receiver can obtain the executable code (and possibly icons and description files) from the CICAM. The operator may give the CICAM application description a higher priority than the priority of the broadcaster application, so that the CICAM application will be started and not the broadcaster-provided application. The operator may also change the control code of the broadcaster application to PRESENT to prevent automatic execution of the broadcaster application.

Alternatively, the broadcaster can insert a description for the CICAM application, but keep the priority for the CICAM application the same as the priority of the broadcaster application. The operator may thus rely on a receiver that is configured (either by itself or due to an application from the CICAM that was started already) to show a launcher User Interface 51 so that a user may select one of the applications for starting (this is similar to the "second option" and "third option" method for starting launcher 51 as described in reference to figure 5).

As a further alternative, the broadcaster can insert a description for a launcher application in the AIT (this is similar to the "first option" described in reference to figure 5). The launcher application can have a higher priority than the application provided by the broadcaster, but the operator may also take other measures to ensure that the broadcaster application is not automatically run. The inserted launcher application, which itself may be obtained from the object carousel (dvb://), a network (http://) or a CICAM (cam://) will thus be the default application for a given service. When it is run, the launcher application will present a User Interface so that the user may select one of a plurality of applications, including the original application signalled by the broadcaster.

In the above embodiments, it is of course not essential that the operator modifies the AIT. The broadcaster may also include references to e.g. CICAM applications controlled by the operator in the original AIT.

In the foregoing description of the figures, the invention has been described with reference to specific embodiments thereof. It will, however, be evident that various modifications and changes may be made thereto without departing from the scope of the invention as summarized in the attached claims.

It is noted that in some examples reference is made to a CI-Plus system. However, the invention can also be used in connection with a CI system. In fact, the invention can be used with a general interface unit for receiving a Conditional Access Module. The invention is thus not limited to the exemplary CICAM described in the exemplary embodiments. More general Conditional Access Modules may be used, such as CableCard.

The DVB application information table (AIT) has been used as an example of more general application signalling. It will be clear to the skilled person that the specific form of the AIT is but an example and not essential to the invention. In embodiments according the invention, the application signalling may have another form than as defined in AIT.

Combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

Aspects of the invention may advantageously be understood from the below clauses:

Clause 1. Receiver (10) for receiving a digital broadcasting signal, such as a Digital Video Broadcasting, DVB, signal, the receiver comprising:
- a receiving unit (11) for receiving the digital broadcasting signal;
- an interface unit (13) for connecting to a Conditional Access Module, CAM (14);
- a processing unit (12) configured for
- obtaining application information signalling (20) from the digital broadcasting signal;
- obtaining from the application information signalling at least one application description item (23, 24, 25), each of the at least one application description item corresponding to an application and including a reference to a source of executable code of the application;
   **characterized in that** the processing unit is further configured to
- obtain executable code for an application from a CAM via the interface unit if the reference to a source of executable code corresponds to a predetermined format.

Clause 2. Receiver (10) according to clause 1, wherein the reference to a source of executable code is a URL with a predetermined prefix, such as "cam://".

Clause 3. Receiver (10) according to any of the previous clauses, wherein the processing unit (12) is further configured to form an application list from one or more obtained application description items.

Clause 4. Receiver (10) according to clause 3, wherein the processing unit (12) is configured to search the CAM for stored applications and to add found applications to the application list.

Clause 5. Receiver (10) according to clause 3 or 4, wherein the processing unit (12) is configured to monitor the application information signalling (20) for applications offered on the current channel and to add found applications to the application list.

Clause 6. Receiver (10) according to any of the clauses 3-5, wherein the processing unit (12) is configured to search an object carousel of the digital broadcasting signal for applications and to add found applications to the list.

Clause 7. Receiver according to any of the clauses 3-6, wherein the processing unit (12) is configured to remove an item from the application list if the application corresponding to the item is not supported by the receiver.

Clause 8. Receiver according to any of the clauses 3-7, wherein the application description item includes priority information, and the processing unit (12) is configured to remove an item from the application list if the priority is lower than the priority of another application description item for the same application.

Clause 9. Receiver according to any of the clauses 3-8, wherein the processing unit (12) is configured to present the application list to the user for selection of an application by the user.

Clause 10. Method for receiving a digital broadcasting signal, such as a Digital Video Broadcasting, DVB, signal, in a receiver (10) comprising an interface unit (13) for connecting to a Conditional Access Module, CAM (14), the method comprising:
- receiving information included in the digital broadcasting signal relating to an interactive application;
- obtaining application information signalling (20) from the digital broadcasting signal;
- obtaining from the application information signalling at least one application description item (23, 24, 25), each of the at least one application description item corresponding to an application and including a reference to a source of executable code of the application;
   characterized by
- obtaining executable code for an application from a CAM via the interface unit if the reference to a source of executable code corresponds to a predetermined format.

Clause 11. Method according to clause 10, comprising any of the additional features of clauses 2-9.

## Claims

1. Receiver (10) for receiving a digital broadcasting signal, such as a Digital Video Broadcasting, DVB, signal, the receiver comprising a processing unit (12) configured for
- obtaining a plurality of application description items (23, 24, 25), each of the at least one application description items corresponding to an application and including a reference to a source of executable code of the application, the plurality of application description items forming an application list;
- selecting an application from the application list based on pre-stored application preferences or on a selection made by a user via a User Interface, UI;
- executing the selected application, by obtaining and executing the corresponding executable code.

2. Receiver (10) according to claim 1, wherein the processing unit (12) is configured for
- providing a User Interface, UI, (51, 80) for selecting the selected application, said UI displaying a representation of the application list;

3. Receiver (10) according to claim 1 or 2, wherein the processing unit (12) is configured for selecting a selected application based on pre-stored application preferences including a preference for an application source or an application version.

4. Receiver (10) according to any of the previous claims, wherein the processing unit (12) is configured to, as part of obtaining a plurality of application description items, search a connected Conditional Access Module, CAM, for stored applications and to add found applications to the application list.

5. Receiver (10) according to any of the previous claims, wherein the processing unit (12) is configured to, as part of obtaining a plurality of application description items, monitor application information signalling (20) in the digital broadcasting signal for applications offered on the current channel and to add found applications to the application list.

6. Receiver (10) according to any of the previous claims, wherein the processing unit (12) is configured to, as part of obtaining a plurality of application description items, search an object carousel of the digital broadcasting signal for applications and to add found applications to the application list.

7. Receiver (10) according to any of the previous claims, wherein the processing unit (12) is configured to remove an item from the application list if the application corresponding to the item is not supported by the receiver.

8. Receiver (10) according to any of the previous claims, wherein the application description item includes priority information, and the processing unit (12) is configured to remove an item from the application list if the priority is lower than the priority of another application description item for the same application.

9. Receiver (10) according to any of the previous claims, wherein the functionality of obtaining a plurality of application description items is provided by an application provided by the receiver.

10. Receiver (10) according to any of the previous claims, wherein the functionality of obtaining a plurality of application description items is provided by an application signaled in the application information signalling;

11. Receiver (10) according to any of the previous claims, wherein the functionality of obtaining a plurality of application description items is provided by an application provided in a Conditional Access Module, CAM, connected to the receiver.

12. Receiver (10) wherein the processing unit (12) is configured for obtaining executable code for an application from a connected CAM if a reference to a source of executable code in one of the application description items from the application information signalling (20) corresponds to a predetermined format.

13. Method for starting an application in a receiver for a digital broadcasting signal, such as a Digital Video Broadcasting, DVB, signal, the method comprising:
- obtaining, by the receiver, a plurality of application description items (23, 24, 25), each of the at least one application description items corresponding to an application and including a reference to a source of executable code of the application, the plurality of application description items forming an application list;
- executing a selected application from the application list, by obtaining and executing the corresponding executable code.

14. Method according to claim 13, comprising any of the additional features of claims 2-12.
